# EUROPEAN PATENT SPECIFICATION

(11) **EP 0 360 881 B1**
(45) Date of publication and mention of the grant of the patent: **12.05.1993**
(21) Application number: 88115791.1
(22) Date of filing: 26.09.1988
(51) Int. Cl.: A23L 1/176

(54) **Crumb coating**
Körniger Überzug
Chapelure

(43) Date of publication of application: 04.04.1990
(73) Proprietor: FRISCO-FINDUS AG, CH-9400 Rorschach (CH)
(72) Inventor: Rohner, Erich, S-260 50 Billesholm (SE)

(56) References cited:
- EP-A- 0 109 226
- EP-A- 0 223 865
- EP-A- 0 237 162
- US-A- 4 640 837
- PATENT ABSTRACTS OF JAPAN, vol. 7, no. 185 (C-181)[1330], 13th August 1983; & JP-A-58 89 152 (AJINOMOTO K.K.) 27-05-1983

## Description

The present invention relates to a process for the preparation of a crumb coating, more particularly a bread crumb coating, suitable for coating a foodstuff.

In the preparation of frozen breaded food products such as fish, poultry, meat, crepes etc. a good portion is generally coated with a batter, breaded, then cooked by deep-fat frying, cooled and finally deep-frozen. When required for consumption the coated food product is usually heated by shallow-frying (i.e. in a frying pan), sometimes by oven-heating or even grilling. When a traditional coated product is prepared for consumption by microwave heating, it becomes soft and soggy.

We have now devised a process for the preparation of a crumb coating for a good product intended to be prepared for consumption by microwave heating, optionally with the use of susceptor material, which involves prefrying the crumbs. Surprisingly, the use of prefried crumbs gives the following advantages when compared with non prefried crumbs when the coated product is prepared for consumption in a microwave oven:
a) a substantial increase in crispness especially when susceptor material is used; this increased crispness is apparent even after two months frozen storage of the crumbs,
b) there is no tendency of the crumbs to become chewy or tough
c) the time of preparation for consumption in the microwave oven can be reduced by at least 10%: this means that there is a less severe heat treatment of the coated foodstuff e.g. fish, which therefore remains more juicy and retains a desirable texture.

In addition, the duration of deep-fat frying of the whole coated product before freezing can be slightly reduced.

Accordingly, the present invention provides a process of preparing a crumb coating which consists of prefrying bread crumbs in an edible oil at a temperature of from 160° to 220°C for a period of from 1 to 60 seconds to produce prefried crumbs containing from 35 to 60% by weight of oil based on the total weight of crumbs. Any bread crumb that is used to coat any chilled or deep-frozen food product may be used especially bread crumbs used to coat chilled or frozen food products designed for microwave preparation for consumption where crispiness is desirable e.g. a traditionally manufactured Pandora type bread crumb.

The temperature of the prefrying is preferably from 170° to 210°C and especially from 185° to 200°C. The duration of the prefrying is preferably from 2 to 30 seconds and especially from 3 to 15 seconds. Preferably, the higher the temperature, the shorter the time and vice versa.

The oil is advantageously a vegetable oil e.g. palm oil, corn oil, soybean oil, peanut oil, olive oil, sunflower oil and the like, or mixtures thereof. The prefrying may be carried out in a fryer and after prefrying the fried bread crumbs are removed from the oil and conveniently excess oil is removed from the surfaces of the particles. Finally, the prefried bread crumbs may be cooled and, if necessary, stored before use.

The prefried bread crumbs advantageously contain from 40 to 50% by weight of oil based on the total weight of the bread crumbs.

The present invention also provides a crumb coating formed by prefrying bread crumbs in an edible oil at a temperature from 160° to 220°C for a period of from 1 to 60 seconds.

The prefried bread crumbs may be coated onto a food product by standard procedures and the present invention also provides a good product coated with a crumb coating according to the present invention, as well as a process for preparing such a coated food product.

Food products which may be coated include fish, poultry, meat, vegetable and crepes etc.

The following Examples further illustrate the present invention.

### Example 1

Pandora type bread crumbs were fried in palm oil at 195° C for 5 seconds after which time they were removed from the oil and excess oil drained off. The prefried crumbs were then cooled. The oil uptake was 45% by weight based on the total weight of crumbs and the crumbs had an attractive, golden brown appearance and a very crisp texture.

### Example 2

A frozen cod portion was deglazed with water, predusted, battered and then breaded with prefried crumbs prepared as in Example 1, deep-fat fried at 190°C for 60 seconds and then deep-frozen.

When prepared for consumption the deep-frozen cod portion was thawed and heated in a microwave oven. The coating had a very desirable crispiness and did not become chewy or tough.

### Comparative Example A

A cod portion was battered and then breaded with crumbs prefried in palm oil but where the oil uptake was only 10% by weight based on the weight of crumbs, and finally deep frozen.

The deep-frozen cod portion was thawed and then heated in a microwave oven for consumption. The coating was rather soft and soggy and not crispy as that of Example 2.

### Comparative Example B

A cod portion was battered and then breaded with crumbs which had been coated with oil at ambient temperature so that the oil uptake was 45% by weight based on the total weight of the crumbs.

When prepared for consumption by thawing and heating in a microwave oven, the coating was soft and soggy.

## Claims

1. A process of preparing a crumb coating which consists of prefrying bread crumbs in an edible oil at a temperature of from 160° to 220°C for a period of from 1 to 60 seconds to produce prefried crumbs containing from 35 to 60% by weight of oil based on the total weight of crumbs.

2. A process according to claim 1 wherein the temperature is from 185° to 200°C.

3. A process according to claim 1 wherein the duration is from 3 to 15 seconds.

4. A process according to claim 1 wherein after prefrying, excess oil is drained from the crumbs.

5. A process according to claim 4 wherein after draining excess oil from the crumbs, the crumbs are cooled.

6. A crumb coating obtainable by a process according to claim 1.

7. A food product comprising a foodstuff coated with a crumb coating according to claim 6.

8. A food product according to claim 7 wherein the foodstuff is fish.

9. A process for the preparation of a coated food product wherein foodstuff is coated with a crumb coating claimed in claim 6.

## Patentansprüche

1. Verfahren zur Zubereitung einer Bröselbeschichtung, das aus einem Vorrösten von Semmelbröseln in Speiseöl bei einer Temperatur von 160 bis 220°C und einer Zeitdauer von 1 bis 60 Sekunden besteht, um vorgeröstete Brösel herzustellen, die 35 bis 60% des Gewichts an Öl bezogen auf das Gesamtgewicht der Brösel enthalten.

2. Verfahren nach Anspruch 1, wobei die Temperatur 185 bis 200°C beträgt.

3. Verfahren nach Anspruch 1, wobei die Zeitdauer 3 bis 15 Sekunden beträgt.

4. Verfahren nach Anspruch 1, wobei nach dem Vorrösten das überschüssige Öl von den Bröseln abgeleitet wird.

5. Verfahren nach Anspruch 4, wobei nach dem Ableiten des überschüssigen Öls von den Bröseln die Brösel gekühlt werden.

6. Bröselbeschichtung, die durch ein Verfahren nach Anspruch 1 erhältlich ist.

7. Nahrungsmittelprodukt mit einem Nahrungsmittelstoff, der mit der Bröselbeschichtung nach Anspruch 6 beschichtet ist.

8. Nahrungsmittelprodukt nach Anspruch 7, wobei der Nahrungsmittelstoff Fisch ist.

9. Verfahren zur Zubereitung eines beschichteten Nahrungsmittelprodukts, wobei der Nahrungsmittelstoff mit einer Bröselbeschichtung nach Anspruch 6 beschichtet ist.

## Revendications

1. Procédé de préparation d'un revêtement de chapelure, qui consiste à préfrire de la chapelure à base de pain dans une huile comestible à une température de 160° à 220°C pendant un temps de 1 à 60 secondes pour produire de la chapelure préfrite, contenant 35 à 60 % en poids d'huile sur la base du poids total de la chapelure.

2. Procédé suivant la revendication 1, dans lequel la température est comprise dans l'intervalle de 185° à 200°C.

3. Procédé suivant la revendication 1, dans lequel la durée est comprise dans l'intervalle de 3 à 15 secondes.

4. Procédé suivant la revendication 1, dans lequel, après préfriture, l'huile en exces est séparée de la chapelure par égouttage.

5. Procédé suivant la revendication 4, dans lequel, après égouttage de l'huile en excès de la chapelure, la chapelure est refroidie.

6. Revêtement de chapelure pouvant être obtenu par un procédé suivant la revendication 1.

7. Produit alimentaire comprenant une denrée alimentaire enrobée avec un revêtement de chapelure suivant la revendication 6.

8. Produit alimentaire suivant la revendication 7, dans lequel la denrée alimentaire est le poisson.

9. Procédé de préparation d'un produit alimentaire enrobé, dans lequel une denrée alimentaire est enrobée avec un revêtement de chapelure suivant la revendication 6.
